# EUROPEAN PATENT APPLICATION

(11) **EP 4 123 959 A1**
(43) Date of publication of application: **25.01.2023**
(21) Application number: 22176224.8
(22) Date of filing: 30.05.2022
(51) Int. Cl.: H04L 9/08, H04L 9/00

(54) **PRIVATE INFORMATION WITH A SHARED SINGLE SOURCE OF TRUTH**

(30) Priority: 20.07.2021 US 202117380919
(71) Applicant: Intuit Inc., Mountain View, CA 94043 (US)
(72) Inventor: GABRIEL, Michael R, Mountain View, 94043 (US); SCOTT, Glenn, Mountain View, 94043 (US)
(74) Representative: D Young & Co LLP

(57) **Abstract**

A method uses private information with a shared single source of truth. A message is received responsive to adding a first shared block to a shared object ledger of a shared object. The message includes message data. A private block is added to a private object ledger to update a private object. The private block includes private data from the message data. A second shared block is added to the shared object ledger to update the shared object. The second shared block includes shared data from the message data.

## Description

### BACKGROUND

A relationship between entities is tracked by the shared interactions between the entities. The state of the entities and of the relationship may be tracked by independent journaled objects. The journaled objects are data structures that maintain immutable records of the updates to the objects representing the entities and the relationships. The object for the relationship, e.g., and invoice object, is a shared object with fields visible to both of the entities, providing a common view of the state changes and agreements made during the life cycle of the relationship. A challenge is to maintain private information and state changes that are visible to a single entity that correspond to the changes to the shared object.

### SUMMARY

Particular embodiments are set out in the independent claims. Various optional examples are set out in the dependent claims. In general, in one aspect, one or more embodiments relate to a method that uses private information with a shared single source of truth. A message is received responsive to adding a first shared block to a shared object ledger of a shared object. The message includes message data. A private block is added to a private object ledger to update a private object. The private block includes private data from the message data. A second shared block is added to the shared object ledger to update the shared object. The second shared block includes shared data from the message data.

In general, in one aspect, one or more embodiments relate to a system including a server with one or more processors and one or more memories, a first client device, a second client device, and an application executing on one or more processors of the server. A message is received responsive to adding a first shared block to a shared object ledger of a shared object. The message includes message data. A private block is added to a private object ledger to update a private object. The private block includes private data from the message data. A second shared block is added to the shared object ledger to update the shared object. The second shared block includes shared data from the message data.

In general, in one aspect, one or more embodiments relate to a method that uses private information with a shared single source of truth. A transaction is initiated by adding an invoice block to a shared ledger. An approval message is received responsive to adding a change block to the shared ledger to update a shared object. A private approval block is added to a private object ledger to update a private object. The private block includes private data from the message data. A public approval block is added to the shared ledger to update the shared object. The public approval block includes shared data from the message data. The transaction is completed by adding an invoice complete block to the shared ledger.

Other aspects of the disclosure will be apparent from the following description and the appended claims.

### BRIEF DESCRIPTION OF DRAWINGS

Figure 1A and Figure 1B show diagrams of systems in accordance with disclosed embodiments.
Figure 2 shows a flowchart in accordance with disclosed embodiments.
Figure 3A and Figure 3B, show examples in accordance with disclosed embodiments.
Figure 4A and Figure 4B show computing systems in accordance with disclosed embodiments.

### DETAILED DESCRIPTION

Specific embodiments of the disclosure will now be described in detail with reference to the accompanying figures. Like elements in the various figures are denoted by like reference numerals for consistency.

In the following detailed description of embodiments of the disclosure, numerous specific details are set forth in order to provide a more thorough understanding of the disclosure. However, it will be apparent to one of ordinary skill in the art that the disclosure may be practiced without these specific details. In other instances, well-known features have not been described in detail to avoid unnecessarily complicating the description.

Throughout the application, ordinal numbers (e.g., first, second, third, *etc.)* may be used as an adjective for an element (*i.e.,* any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

In general, invoices track transactions between entities (e.g., between businesses). The entities and invoices may be tracked and recorded with data structures recorded with computing systems. The data structures include objects that include ledgers. The object are journaled objects that maintain an immutable record of the changes to the fields of the objects using ledgers. Each object includes a ledger and blocks are added to the ledger when the fields or states of the objects are changed.

Public information (accessible to each entity of a transaction) is stored in a public object with a public ledger. Private information (accessible to one entity) is stored in a private object with a private ledger. Updates to the public ledger (and object) are made in conjunction with updates to the private ledgers (and objects). The public ledger stores public information (accessible to each entity) and the private ledgers store private information (accessible to the entity maintaining the private ledger). For example, public information may include the price of a transaction, which is stored publicly. Private information may identify who approved the transaction or changes to the transaction, which is not shared with the other parties to the transaction.

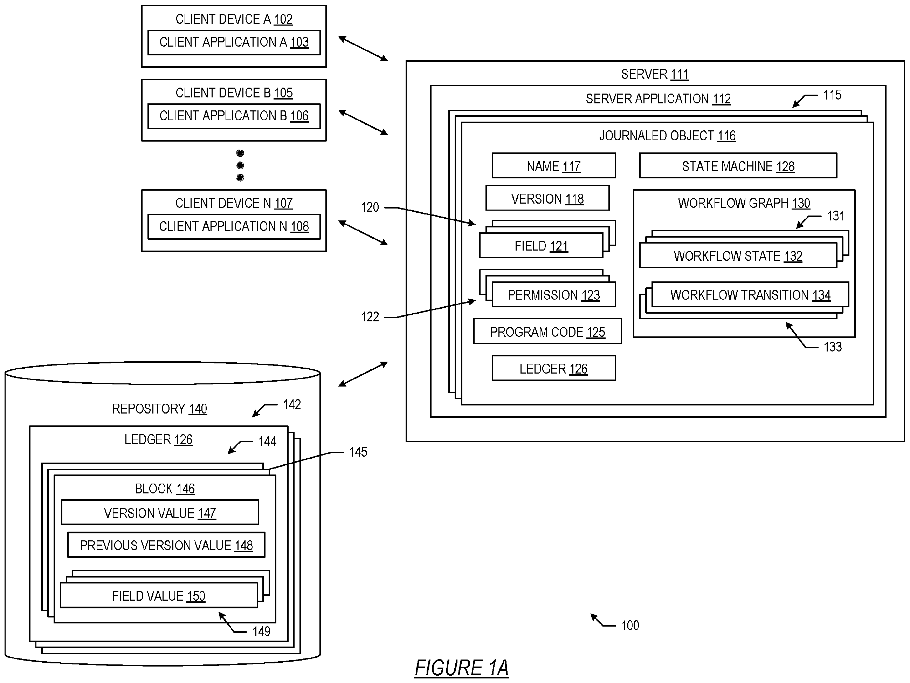

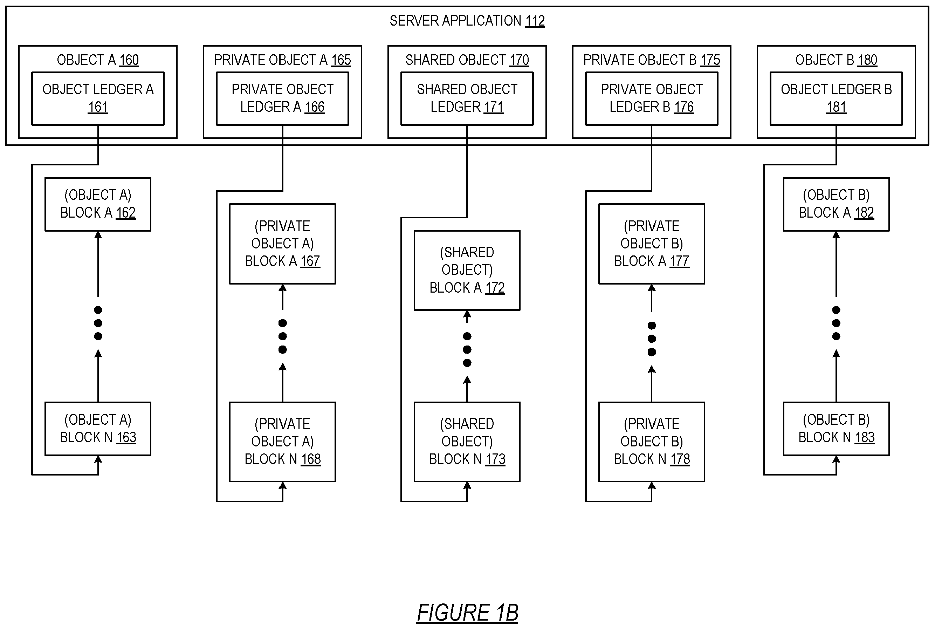

Figures 1A and 1B show diagrams of embodiments that are in accordance with the disclosure. Figure 1A shows the system (100) that implements private information with a shared single source of truth. Figure 1B shows the server application (112) that stores public and private information with objects and ledgers. The embodiments of Figures 1A and 1B may be combined and may include or be included within the features and embodiments described in the other figures of the application. The features and elements of Figures 1A and 1B are, individually and as a combination, improvements to hash chain technology and computing systems. The various elements, systems, and components shown in Figures 1A and 1B may be omitted, repeated, combined, and/or altered as shown from Figures 1A and 1B. Accordingly, the scope of the present disclosure should not be considered limited to the specific arrangements shown in Figures 1A and 1B.

Turning to Figure 1A, the system (100) records transactions using the journaled objects (115) with the ledgers (142). The system (100) includes the client devices A (102) through N (107), the server (110), and the repository (140).

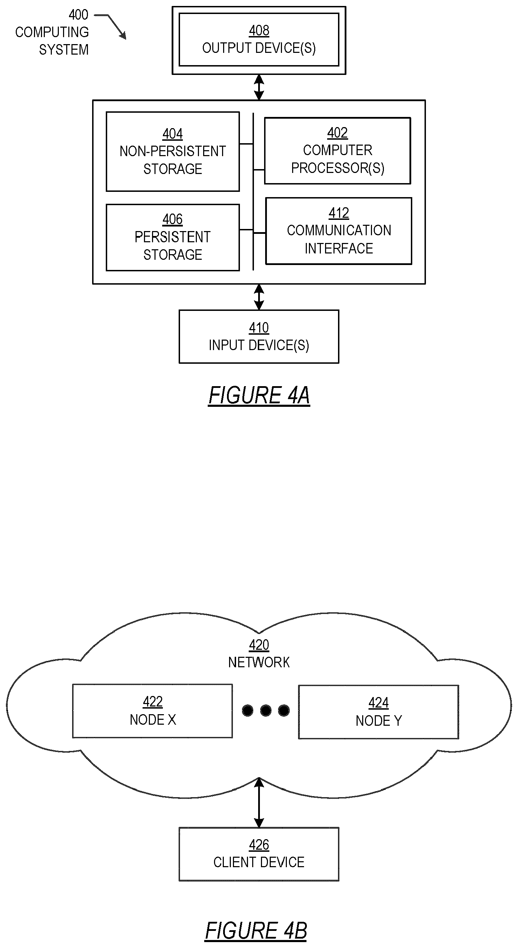

The client devices A (102), B (105), through N (107) are computing systems (an embodiment of which is described in Figure 4A) that perform transactions using the journaled objects (115) with the ledgers (142). The client devices A (102), B (105), and N (107) respectively include the client applications A (103), B (106), and N (108).

The client applications A (103) through N (108) are programs that operate on the client devices A (102) through N (107) to conduct transactions. In one embodiment, the client applications A (103) through N (108) are browser programs that display information from a website hosted by the server application (112). As an example, the client application A (103) may be used by the seller of a product to place the product on sale on the website. The client application B (106) may be used by a buyer to purchase the product through the website with the purchase being recorded in the journaled object (115) and the ledger (126). In one embodiment, the client applications A (103) through N (108) communicate with the server application (112) using a representational state transfer application programming interface (RESTful API).

The server (111) is a computing system (an embodiment of which is described in Figure 4A) that manages transactions using the journaled objects (115) with the ledgers (142). The server (111) includes the server apparition (112).

The server application (112) is a collection of programs running on the server (111). The server application (112) may be a monolithic application or a distributed application that runs on multiple servers. The server application (112) may include a web application that hosts a website accessed by the client applications A (103) through N (108) to engage create transactions recorded by the journaled objects (115) and the ledgers (142).

The journaled objects (115), including the journaled object (116), are computer programming objects that load, store, and process data in the system (100). Each of the journaled objects (115) may correspond to a transaction. As an example, the journaled object (116) may be a transaction between a user of the client device A (102) and a user of the client device B (105). The journaled object (116) includes the name (117), the version (118), the fields (120), the permissions (122), the program code (125), the ledger (126), the state machine (128), and the workflow graph (130).

The name (117) is the name of the journaled object (116). The names of the journaled objects (115) may identify what the object is storing. For example, the names may include the strings "INVOICE" for an object that represents an invoice of a transaction between two parties, "CONSUMER" for an object that represents an entity that is the buyer in a transaction, "VENDOR" for an object that represents an entity that is the seller in a transaction, *etc.*

The version (118) identifies the version of the object (116). In one embodiment, the version may be an identifier for the latest block added to the ledger (126). The name (116) with the version (118) uniquely identify the journaled object (116).

The fields (120), including the field (121), are the pieces of data stored by the journaled object (116). For example, the fields for an invoice object may include identifiers for the entities engaging in the transaction recorded by the invoice. The fields for an entity may include the contact information for the entity and a list of transactions (e.g., invoice objects) to which the entity is a party.

The permissions (122), including the permission (123), identify the object and processes of the system (100) that may access the fields of the journaled object (116). For example, an invoice object for a transaction may be accessed by the entity objects engaging in the transaction, which is recorded in the permissions of the invoice object. The permissions of the entity objects would prevent the entity objects from directly sharing data, unless it is through a separate object, such as an invoice object.

The program code (125) includes the code and instructions that execute on the server (111). The program code (125) is the code that loads, stores, and processes data for the journaled object (116).

The ledger (126) is a hash chain for the object (116). In one embodiment, the ledger (126) stores an immutable historical record of the values of and changes made to the fields (120).

The state machine (128) is a program that controls the status of the journaled object (116). The state machine (128) is part of the program code (125) and includes the workflow states (131) and workflow transitions (133) defined by the workflow graph (130).

The workflow graph (130) defines the state machine (128). The workflow graph (130) includes the workflow states (131) and the workflow transitions (133).

The workflow states (131) are the nodes of the workflow graph (130). The workflow states (131), including the workflow state (132), define the states of the workflow graph (130) that form the state machine (128). As an example, the journaled object (116) may be a shared object for an invoice for a transaction between two entities. The workflow states for the invoice may include an initialize invoice state, a change invoice state, a change approval state, an invoice complete state, *etc.* The state machine (128) maintains the current workflow state until a workflow transition is triggered.

The workflow transitions (133) are the edges of the workflow graph (130) that connect between the workflow states (131). The workflow transitions (133), including the workflow transition (134), transition the state machine (128) between the workflow states (131). For example, a change invoice workflow transition may change from the initialize invoice state to the change invoice state when the system (100) receives a message requesting to change the data in the invoice.

In one embodiment, the execution of workflow transitions includes adding blocks to the ledgers to update the journaled objects. The workflow transition (134) may transition to the workflow state (132) and execution of the workflow transition (134) may include adding the block (146) to the ledger (126). For example, the block (146) may be an invoice complete block that, when added to the ledger (126), completes the workflow transition (134) to the workflow state (132).

The repository (140) is a computing system that may include multiple computing devices in accordance with the computing system (400) and the nodes (422) and (424) described below in Figures 4A and 4B. The repository (140) may be hosted by a cloud services provider that also hosts the server (111). The cloud services provider may provide hosting, virtualization, and data storage services as well as other cloud services and to operate and control the data, programs, and applications that store and retrieve data from the repository (140). The data in the repository (140) includes the ledgers (142) that correspond to the journaled objects (115). Each of the journaled objects (115) may include at least one of the ledgers (142).

The ledgers (142), including the ledger (126), store the data of the journaled objects (115) as immutable records that cannot be easily changed or modified. The ledger (126) includes the blocks (144).

The blocks (144), including the block (146) and the previous block (145), form a hash chain that stores the values and updates to the fields (120) of the journaled object (116) as an immutable record.

The block (146) is the most recently added block to the hash chain that forms the ledger (126). The block (146) includes the version value (147), the previous version value (148), and the field values (149).

The version value (147) uniquely identifies the block (146) in the ledger (126). In one embodiment, the version value (147) is calculated by hashing the previous version value (148) with the field values (149). The hashing is performed by a hash function that implements a cryptographic hash algorithm to generate a hash value (e.g., the version value (147)) (also referred to as a digest) from a payload (e.g., the field values (149)). Cryptographic hash algorithms that may be used as the hash function include the MD series of algorithms (MD4, MD5, MD6, *etc.),* the SHA series of algorithms (SHA-1, SHA-2, SHA-256, SHA-512, *etc.),* the RIPEMD series of algorithms (RIPEMD, RIPEMD-128, RIPEMD-320, *etc.),* the Whirlpool algorithm, the BLAKE series of algorithms (BLAKE2s, BLAKE-256, BLAKE3, *etc.*)*, etc.*

The previous version value (148) identifies the previous block (145) in the ledger (126). The previous block (145) was added to the ledger (126) before the block (146) was added to the ledger (126).

The field values (149), including the field value (150), are the values for the fields (120) of the journaled object (116). Each one of the blocks (144) may include a complete set of field values (149) for each of the fields (120). In one embodiment, the block (146) includes field values for fields with values that have changed. For example, when a price field is changed and other fields are not, the block (146) may include the field value for the price field and not include field values for the other fields.

Turning to Figure 1B, the server application (112) includes multiple objects. In one embodiment, the objects are used to record data about entities and transactions. For example, the objects A (160) and B (180) may record data about the entities taking part in a transaction. The shared object (170) is accessible to both the objects A (160) and B (180) and may record an invoice of a transaction between the entities that correspond to the objects A (160) and B (180). The private object A (165) is accessible by the object A (160) and not by the object B (180). The private object B (175) is accessible by the object B (180) and not by the object A (160). The private objects A (165) and B (175) store private information related to the transaction recorded with shared object (170).

The objects (160), (165), (170), (175), and (180) respectively include the ledgers (161), (166), (171), (176), and (181). The blocks A (162), (167), (172), (177), and (182) respectively are the initial blocks added to the ledgers (161), (166), (171), (176), and (181). The blocks N (163), (168), (173), (178), and (183) respectively are the latest blocks added to the ledgers (161), (166), (171), (176), and (181). As an example, the block A (172) may be an initialize invoice block and the block N (173) may be an invoice complete block.

The blocks of the private object ledgers (also referred to as private blocks) may include references to blocks in the shared object ledgers (also referred to as shared blocks). In one embodiment, the private blocks each include a reference to the last shared block of the shared object ledger at the time the private block is added to the private object ledger. For example, when the private block A (167) is added to the private object ledger A (166), the shared block A (172) may be the last block of the shared object ledger (171) and a reference to the shared block A (172) may be included in the private block A (167). Also, when the private block N (168) is added to the private object ledger A (166), the shared block N (173) may be the last block of the shared object ledger (171) and a reference to the shared block N (173) may be included in the private block N (168).

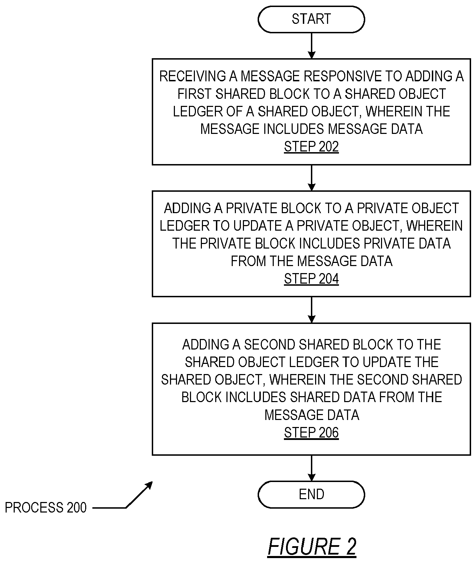

Figure 2 shows flowchart of processes in accordance with the disclosure. Figure 2 is a flowchart of a method of using private information with a shared single source of truth. The embodiments of Figure 2 may be combined and may include or be included within the features and embodiments described in the other figures of the application. The features of Figure 2 are, individually and as an ordered combination, improvements to hash chain technology and computing systems. While the various steps in the flowcharts are presented and described sequentially, one of ordinary skill will appreciate that at least some of the steps may be executed in different orders, may be combined or omitted, and at least some of the steps may be executed in parallel. Furthermore, the steps may be performed actively or passively. For example, some steps may be performed using polling or be interrupt driven. By way of an example, determination steps may not have a processor process an instruction unless an interrupt is received to signify that condition exists. As another example, determinations may be performed by performing a test, such as checking a data value to test whether the value is consistent with the tested condition.

Turning to Figure 2, the process (200) adds blocks to ledgers to record transactions using private information with a shared single source of truth. The process (200) may be performed by an application executing on a server.

At Step 202, a message that is responsive to adding a first shared block to a shared object ledger of a shared object is received. The message includes message data. In one embodiment, the message data includes an updated price that is submitted by a buyer in a transaction being recorded by the system. The message may be an approval, from the seller, of the updated price.

In one embodiment, the first shared block is added to the shared object ledger to update a shared object. The shared object may correspond to the invoice of the transaction. In one embodiment, a first shared field of the shared object is updated with a first shared value recorded in the first shared block. For example, the first shared value may be the updated price from the message data.

In one embodiment, an update to the private object is triggered in response to adding the first shared block. For example, after receiving an updated price, the private object may be updated to store an approval the price change to the transaction.

In one embodiment, the shared object ledger is traversed to retrieve shared object data. The shared object data may include the price change. The ledger may be traversed by locating that latest block added to the ledger and determining if the latest block includes the information being sought. If the latest block does not include the information, then the previous block is located, and the determination is performed again. Each of the blocks may be located until the information is identified or until there are no more blocks to locate.

In one embodiment, a private object ledger, of the private object, is traversed to retrieve private object data. The private object data may include an identifier of an approver for the price change.

In one embodiment, a first object ledger, of a first object, is traversed to retrieve first object data corresponding to the private object data. For example, the first object data may include contact information (e.g., an email address) assigned to the identifier of the approver.

In one embodiment, a request is transmitted to a client device. The request may be transmitted using the first object data the private object data. The private object data *(e.g.,* the identifier of the approver) is used to locate the contact information (the first object data) to which the request is sent.

In one embodiment, the shared object data is presented to a client device. For example, the shared object data includes the price change, which is transmitted to and displayed on a client device of the approver that received the request.

In one embodiment, receiving the message from the client device in response to the request, which may be in response to presenting the shared object data. For example, the message may be an approval that is received in response to the price change in the request being displayed on the client device.

At Step 204, a private block is added to a private object ledger to update a private object. The private block includes private data from the message data. For example, the private block may record an approval of the price change and include private information, e.g., the identifier for approver.

In one embodiment, a private field of the private object is updated with a private value recorded in the private block. For example, the private value may be the contact information for the approver, which may change when the approver changes.

In one embodiment, a first private object is accessible by a first object that represents a first entity (e.g., a seller). A second private object is accessible by second object that represents a second entity (e.g., a buyer). The shared object is accessible by a first object, the first private object, the second private object, and the second object.

At Step 206, a second shared block is added to the shared object ledger to update the shared object. The second shared block includes shared data from the message data. For example, the shared data may include an approval of the price change that uses shared information, e.g., an approval code.

In one embodiment, a shared field of the shared object is updated with a shared value recorded in the shared block. For example, the shared value may include an approval code for the price change, which does not identify the approver (e.g., does not include the identifier or the contact information for the approver).

In one embodiment, a second workflow state is transitioned to from a first workflow state using a workflow transition. The workflow transition may include adding a second shared block *(e.g.,* the approval code). The first workflow state, the second workflow state, and the workflow transition are defined by a workflow graph.

In one embodiment, the process (200) may initiate a transaction by adding an initialize invoice block to the shared object ledger of the shared object. When the transaction is complete, the process (200) may add an invoice complete block to the shared object ledger of the shared object.

In one embodiment, an update request is received to update the shared object. For example, the update request may be from the buyer requesting to update the price of the transaction.

In one embodiment, access to the shared object is authorized with authorization data. The authorization data is retrieved by traversing a private object ledger, *e.g.,* to locate an identifier for authorization data in an object. An object (corresponding to the buyer) is then traversed to retrieve the authorization data, which corresponds to the identifier and is used to authorize the update request.

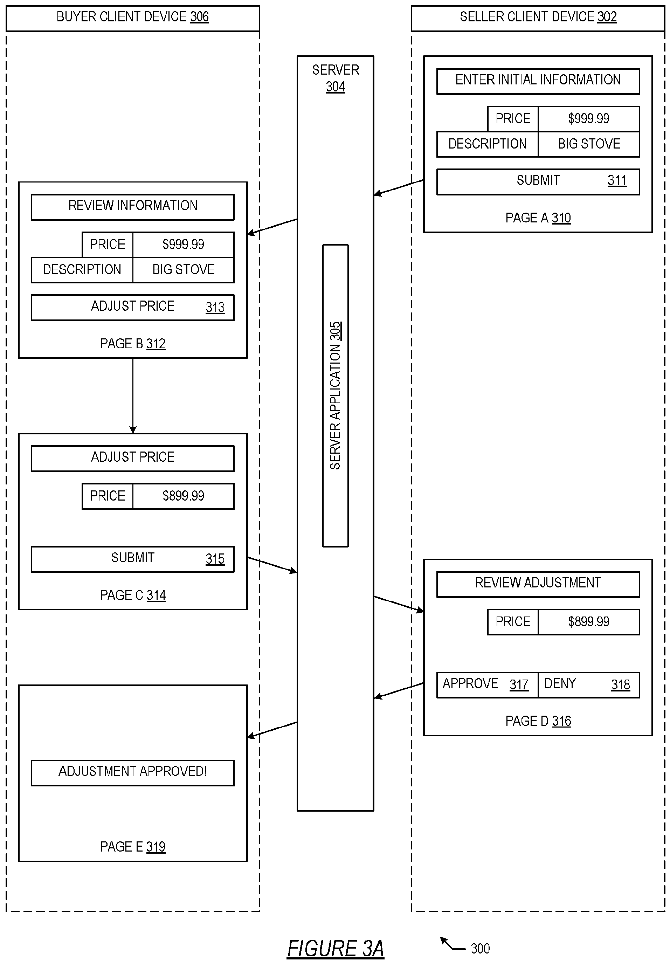

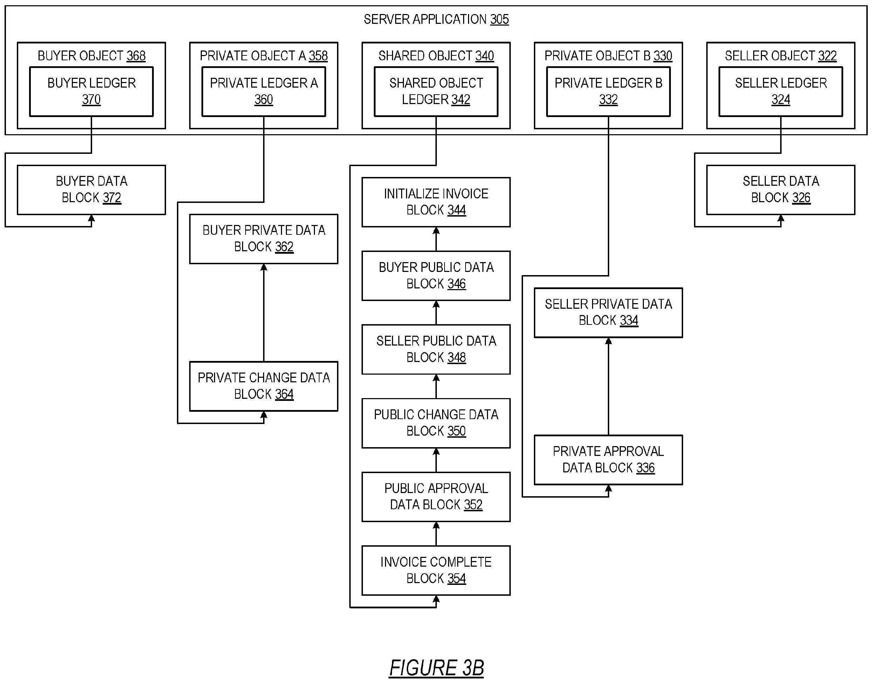

Figures 3A and 3B show examples of systems and sequences that use private information with a shared single source of truth. Figure 3A shows the system (300) using private information with a shared single source of truth. Figure 3B shows the objects and ledgers for a transaction with a single source of trough, e.g., the shared object (340). The embodiments shown in Figures 3A and 3B may be combined and may include or be included within the features and embodiments described in the other figures of the application. The features and elements of Figures 3A and 3B are, individually and as a combination, improvements to hash chain technology and computing systems. The various features, elements, widgets, components, and interfaces shown in Figures 3A and 3B may be omitted, repeated, combined, and/or altered as shown. Accordingly, the scope of the present disclosure should not be considered limited to the specific arrangements shown in Figures 3A and 3B.

Turning to Figure 3A, the system (300) includes the seller client device (302), the server (304), and the buyer client device (306). The seller client device (302) communicates with the server (304) to retrieve the page A (310), which his displayed on the seller client device (302). A user of the seller client device (302) enters the information about the "BIG STOVE", which can be purchased through a website hosted by the server (304). The initial price is recorded as "$999.99". The details are sent to the server (304) after the submit button of page A (310) is selected.

The server includes the server application (305), which processes transactions and maintains the website accessed by the seller and buyer client devices (302) and (306). The server (304) receives the information about the product described as "BIG STOVE" from the seller client device (302). Information about the seller (an entity) from the seller client device (302) may be stored in the seller data block (326) (of Figure 3B). For example, the seller data block (326) (of Figure 3B) may include the description and price as well as contact information, shipping information, account information, *etc.,* that corresponds the seller.

After collecting the information from the seller client device (302), a buyer accesses the website hosted by the server (304). The buyer, using the buyer client device (306), provides information that the server application (305), which is stored in the buyer data block (372) (of Figure 3B). The information may include contact information, shipping information, account information, *etc.,* that corresponds to the buyer.

The buyer client device (306) displays the page B (312), which is received from the server (304). The page B (312) allows the buyer to adjust the price for the stove. After adjusting the price, the adjust price button (313) is selected and the page C (314) is displayed on the buyer client device (306). The submit button (315) is then selected, which triggers the buyer client device (306) to transfer information to the server (304).

The server (304) receives the information and initiates a transaction between the buyer and the seller for the stove. To initiate the transaction, the server application (305) adds the blocks (344) through (350) (of Figure 3B) to the shared object ledger (342) (of Figure 3B) of the shared object (340) (of Figure 3B).

The seller client device (302) receives and displays the page D (316) to allow for the approval of the adjustment. The adjustment may be approved by selection of the button (317) and denied by selection of the button (318). A user of the seller client device (302) selects the approve button (317) to approve the adjustment.

The server (304) receives the approval from the seller client device (302). In response to the approval, the private approval data block (336) (of Figure 3B) is added to the private ledger B (332) (of Figure 3B) of the private object B (330) (of Figure 3B) and the public approval data block (352) (of Figure 3B) is added to the shared object ledger (342) (of Figure 3B) of the shared object (340) (of Figure 3B). The server (304) then sends page E (319) to the buyer client device (306). The page E (319) is displayed on the buyer client device (306) and indicates that the adjustment was approved.

Turning to Figure 3B, the server application (305) uses public information and private information to record a transaction between the buyer, using the buyer client device (306) (of Figure 3A), and the seller, using the seller client device (302) (of Figure 3A). Data for the transaction is stored and processed using the buyer object (368), the private object A (358), the shared object (340), the private object B (330), and the seller object (322).

The buyer object (368) includes the buyer ledger (370), which includes a hash chain formed by the buyer data block (372). The buyer object (368) records and processes data related to a buyer. Data stored in the fields of the buyer object (368) are recorded in the hash chain of the buyer ledger (370). The buyer data block (372) stores contact information, shipping information, account information *etc,* for the buyer of the transaction.

The private object A (358) includes the private ledger A (360), which includes a hash chain formed by the data blocks (362) through (364). The private object A (358) records and processes private information and data related to the transaction. Data stored in the fields of the private object A (358) are recorded in the hash chain of the private ledger A (360).

The buyer private data block (362) stores an identifier that resolves to information recorded in the buyer object (368). For example, the buyer private data block (362) may include an address identifier for an address located in the buyer ledger (370). To retrieve the information identified by the address identifier, the buyer ledger (370) is traversed to reach the buyer data block (372). The address identifier may be the internet protocol (IP) address of the buyer client device (306) (of Figure 3A), which is not accessible to the seller.

The private change data block (364) stores the adjustment to the price with a user identifier for the user that requested the adjustment. The user identifier is not accessible to the seller. The private change data block (364) is the last block added to the private ledger A (360) and includes a previous version value that identifies the buyer private data block (362).

The shared object A (340) includes the shared object ledger (342), which includes a hash chain formed by the data blocks (344) through (354). The shared object A (340) records and processes public information and data related to the transaction that is accessible to both the buyer and the seller. Data stored in the fields of the shared object A (340) are recorded in the hash chain of the shared object ledger (342).

The initialize invoice block (344) is the initial block of the shared object ledger (342). The initialize invoice block (344) is added when the buyer selects to buy a product.

The buyer public data block (346) includes public data about the buyer for the transaction. For example, the buyer public data block (346) may include an identifier for a shipping address that may be used by the seller for shipping the product.

The seller public data block (348) includes public data about the seller for the transaction. For example, the seller public data block (348) may include contact information for the seller and an initial price for the product that is accessible to the buyer.

The public change data block (350) includes public data about a change to the transaction. For example, the public change data block (350) may include the adjustment to the price requested by the buyer responsive to selection of the submit button (315) (of Figure 3A) received by the buyer client device (306) (of Figure 3A).

The public approval data block (352) includes public data about an approval by the seller for the adjustment to the price for the transaction. The public data about the approval may include a binary value indicating that the adjustment is approved.

The invoice complete block (354) completes the transaction. The invoice complete block (354) is added to the shared object ledger (342) upon completion of the transaction, which may be after the seller has shipped the product to the buyer.

The private object B (330) includes the private ledger B (332), which includes a hash chain formed by the data blocks (334) through (336). The private object B (330) records and processes private information and data related to the transaction. Data stored in the fields of the private object B (330) are recorded in the hash chain of the private ledger B (332).

The seller private data block (334) stores an identifier that resolves to information recorded in the seller object (322). For example, the seller private data block (334) may include an address identifier for an address located in the seller ledger (324). To retrieve the information identified by the address identifier, the seller ledger (324) is traversed to reach the seller data block (326). The address identifier may be the internet protocol (IP) address of the seller client device (302) (of Figure 3A), which is not accessible to the buyer.

The private approval data block (336) stores a user identifier for the user of the seller that approved the adjustment to the price. The user identifier of the seller is not accessible to the buyer. The private approval data block (336) is the last block added to the private ledger B (332) and includes a previous version value that identifies the seller private data block (334).

The seller object (322) includes the seller ledger (324), which includes a hash chain formed by the seller data block (326). The seller object (322) records and processes data related to a seller. Data stored in the fields of the seller object (322) are recorded in the hash chain of the seller ledger (324). The seller data block (326) stores contact information, shipping information, account information *etc.,* for the seller of the transaction.

Embodiments of the disclosure may be implemented on a computing system. Any combination of a mobile, a desktop, a server, a router, a switch, an embedded device, or other types of hardware may be used. For example, as shown in Figure 4A, the computing system (400) may include one or more computer processor(s) (402), non-persistent storage (404) (e.g., volatile memory, such as a random access memory (RAM), cache memory), persistent storage (406) (*e.g.,* a hard disk, an optical drive such as a compact disk (CD) drive or a digital versatile disk (DVD) drive, a flash memory, *etc.),* a communication interface (412) (e.g., Bluetooth interface, infrared interface, network interface, optical interface, *etc.),* and numerous other elements and functionalities.

The computer processor(s) (402) may be an integrated circuit for processing instructions. For example, the computer processor(s) (402) may be one or more cores or micro-cores of a processor. The computing system (400) may also include one or more input device(s) (410), such as a touchscreen, a keyboard, a mouse, a microphone, a touchpad, an electronic pen, or any other type of input device.

The communication interface (412) may include an integrated circuit for connecting the computing system (400) to a network (not shown) (e.g., a local area network (LAN), a wide area network (WAN) such as the Internet, a mobile network, or any other type of network) and/or to another device, such as another computing device.

Further, the computing system (400) may include one or more output device(s) (408), such as a screen *(e.g.,* a liquid crystal display (LCD), a plasma display, a touchscreen, a cathode ray tube (CRT) monitor, a projector, or other display device), a printer, an external storage, or any other output device. One or more of the output device(s) (408) may be the same or different from the input device(s) (410). The input and output device(s) (410 and (408)) may be locally or remotely connected to the computer processor(s) (402), non-persistent storage (404), and persistent storage (406). Many different types of computing systems exist, and the aforementioned input and output device(s) (410 and (408)) may take other forms.

Software instructions in the form of computer readable program code to perform embodiments of the disclosure may be stored, in whole or in part, temporarily or permanently, on a non-transitory computer readable medium such as a CD, a DVD, a storage device, a diskette, a tape, flash memory, physical memory, or any other computer readable storage medium. Specifically, the software instructions may correspond to computer readable program code that, when executed by a processor(s), is configured to perform one or more embodiments of the disclosure.

The computing system (400) in Figure 4A may be connected to or be a part of a network. For example, as shown in Figure 4B, the network (420) may include multiple nodes *(e.g.,* node X (422), node Y (424)). Each node may correspond to a computing system, such as the computing system (400) shown in Figure 4A, or a group of nodes combined may correspond to the computing system (400) shown in Figure 4A. By way of an example, embodiments of the disclosure may be implemented on a node of a distributed system that is connected to other nodes. By way of another example, embodiments of the disclosure may be implemented on a distributed computing system having multiple nodes, where each portion of the disclosure may be located on a different node within the distributed computing system. Further, one or more elements of the aforementioned computing system (400) may be located at a remote location and connected to the other elements over a network.

Although not shown in Figure 4B, the node may correspond to a blade in a server chassis that is connected to other nodes via a backplane. By way of another example, the node may correspond to a server in a data center. By way of another example, the node may correspond to a computer processor or micro-core of a computer processor with shared memory and/or resources.

The nodes *(e.g.,* node X (422), node Y (424)) in the network (420) may be configured to provide services for a client device (426). For example, the nodes may be part of a cloud computing system. The nodes may include functionality to receive requests from the client device (426) and transmit responses to the client device (426). The client device (426) may be a computing system, such as the computing system (400) shown in Figure 4A. Further, the client device (426) may include and/or perform all or a portion of one or more embodiments of the disclosure.

The computing system (400) or group of computing systems described in Figures 4A and 4B may include functionality to perform a variety of operations disclosed herein. For example, the computing system(s) may perform communication between processes on the same or different system. A variety of mechanisms, employing some form of active or passive communication, may facilitate the exchange of data between processes on the same device. Examples representative of these inter-process communications include, but are not limited to, the implementation of a file, a signal, a socket, a message queue, a pipeline, a semaphore, shared memory, message passing, and a memory-mapped file. Further details pertaining to a couple of these non-limiting examples are provided below.

Based on the client-server networking model, sockets may serve as interfaces or communication channel end-points enabling bidirectional data transfer between processes on the same device. Foremost, following the client-server networking model, a server process *(e.g.,* a process that provides data) may create a first socket object. Next, the server process binds the first socket object, thereby associating the first socket object with a unique name and/or address. After creating and binding the first socket object, the server process then waits and listens for incoming connection requests from one or more client processes (e.g., processes that seek data). At this point, when a client process wishes to obtain data from a server process, the client process starts by creating a second socket object. The client process then proceeds to generate a connection request that includes at least the second socket object and the unique name and/or address associated with the first socket object. The client process then transmits the connection request to the server process. Depending on availability, the server process may accept the connection request, establishing a communication channel with the client process, or the server process, busy in handling other operations, may queue the connection request in a buffer until server process is ready. An established connection informs the client process that communications may commence. In response, the client process may generate a data request specifying the data that the client process wishes to obtain. The data request is subsequently transmitted to the server process. Upon receiving the data request, the server process analyzes the request and gathers the requested data. Finally, the server process then generates a reply including at least the requested data and transmits the reply to the client process. The data may be transferred, more commonly, as datagrams or a stream of characters (e.g., bytes).

Shared memory refers to the allocation of virtual memory space in order to substantiate a mechanism for which data may be communicated and/or accessed by multiple processes. In implementing shared memory, an initializing process first creates a shareable segment in persistent or non-persistent storage. Post creation, the initializing process then mounts the shareable segment, subsequently mapping the shareable segment into the address space associated with the initializing process. Following the mounting, the initializing process proceeds to identify and grant access permission to one or more authorized processes that may also write and read data to and from the shareable segment. Changes made to the data in the shareable segment by one process may immediately affect other processes, which are also linked to the shareable segment. Further, when one of the authorized processes accesses the shareable segment, the shareable segment maps to the address space of that authorized process. Often, only one authorized process may mount the shareable segment, other than the initializing process, at any given time.

Other techniques may be used to share data, such as the various data described in the present application, between processes without departing from the scope of the disclosure. The processes may be part of the same or different application and may execute on the same or different computing system.

Rather than or in addition to sharing data between processes, the computing system performing one or more embodiments of the disclosure may include functionality to receive data from a user. For example, in one or more embodiments, a user may submit data via a graphical user interface (GUI) on the user device. Data may be submitted via the graphical user interface by a user selecting one or more graphical user interface widgets or inserting text and other data into graphical user interface widgets using a touchpad, a keyboard, a mouse, or any other input device. In response to selecting a particular item, information regarding the particular item may be obtained from persistent or non-persistent storage by the computer processor. Upon selection of the item by the user, the contents of the obtained data regarding the particular item may be displayed on the user device in response to the user's selection.

By way of another example, a request to obtain data regarding the particular item may be sent to a server operatively connected to the user device through a network. For example, the user may select a uniform resource locator (URL) link within a web client of the user device, thereby initiating a Hypertext Transfer Protocol (HTTP) or other protocol request being sent to the network host associated with the URL. In response to the request, the server may extract the data regarding the particular selected item and send the data to the device that initiated the request. Once the user device has received the data regarding the particular item, the contents of the received data regarding the particular item may be displayed on the user device in response to the user's selection. Further to the above example, the data received from the server after selecting the URL link may provide a web page in Hyper Text Markup Language (HTML) that may be rendered by the web client and displayed on the user device.

Once data is obtained, such as by using techniques described above or from storage, the computing system, in performing one or more embodiments of the disclosure, may extract one or more data items from the obtained data. For example, the extraction may be performed as follows by the computing system (400) in Figure 4A. First, the organizing pattern (e.g., grammar, schema, layout) of the data is determined, which may be based on one or more of the following: position *(e.g.,* bit or column position, Nth token in a data stream, *etc.),* attribute (where the attribute is associated with one or more values), or a hierarchical/tree structure (consisting of layers of nodes at different levels of detail-such as in nested packet headers or nested document sections). Then, the raw, unprocessed stream of data symbols is parsed, in the context of the organizing pattern, into a stream (or layered structure) of tokens (where each token may have an associated token "type").

Next, extraction criteria are used to extract one or more data items from the token stream or structure, where the extraction criteria are processed according to the organizing pattern to extract one or more tokens (or nodes from a layered structure). For position-based data, the token(s) at the position(s) identified by the extraction criteria are extracted. For attribute/value-based data, the token(s) and/or node(s) associated with the attribute(s) satisfying the extraction criteria are extracted. For hierarchical/layered data, the token(s) associated with the node(s) matching the extraction criteria are extracted. The extraction criteria may be as simple as an identifier string or may be a query presented to a structured data repository (where the data repository may be organized according to a database schema or data format, such as XML).

The extracted data may be used for further processing by the computing system. For example, the computing system (400) of Figure 4A, while performing one or more embodiments of the disclosure, may perform data comparison. Data comparison may be used to compare two or more data values (e.g., A, B). For example, one or more embodiments may determine whether A > B, A = B, A ! = B, A < B, *etc.* The comparison may be performed by submitting A, B, and an opcode specifying an operation related to the comparison into an arithmetic logic unit (ALU) (*i.e.,* circuitry that performs arithmetic and/or bitwise logical operations on the two data values). The ALU outputs the numerical result of the operation and/or one or more status flags related to the numerical result. For example, the status flags may indicate whether the numerical result is a positive number, a negative number, zero, *etc.* By selecting the proper opcode and then reading the numerical results and/or status flags, the comparison may be executed. For example, in order to determine if A > B, B may be subtracted from A (*i.e.,* A - B), and the status flags may be read to determine if the result is positive (*i.e.,* if A > B, then A - B > 0). In one or more embodiments, B may be considered a threshold, and A is deemed to satisfy the threshold if A = B or if A > B, as determined using the ALU. In one or more embodiments of the disclosure, A and B may be vectors, and comparing A with B requires comparing the first element of vector A with the first element of vector B, the second element of vector A with the second element of vector B, *etc.* In one or more embodiments, if A and B are strings, the binary values of the strings may be compared.

The computing system (400) in Figure 4A may implement and/or be connected to a data repository. For example, one type of data repository is a database. A database is a collection of information configured for ease of data retrieval, modification, re-organization, and deletion. A Database Management System (DBMS) is a software application that provides an interface for users to define, create, query, update, or administer databases.

The user, or software application, may submit a statement or query into the DBMS. Then the DBMS interprets the statement. The statement may be a select statement to request information, update statement, create statement, delete statement, *etc.* Moreover, the statement may include parameters that specify data, or data container (database, table, record, column, view, *etc.),* identifier(s), conditions (comparison operators), functions *(e.g.,* join, full join, count, average, *etc.),* sort *(e.g.,* ascending, descending), or others. The DBMS may execute the statement. For example, the DBMS may access a memory buffer, a reference or index a file for read, write, deletion, or any combination thereof, for responding to the statement. The DBMS may load the data from persistent or non-persistent storage and perform computations to respond to the query. The DBMS may return the result(s) to the user or software application.

The computing system (400) of Figure 4A may include functionality to present raw and/or processed data, such as results of comparisons and other processing. For example, presenting data may be accomplished through various presenting methods. Specifically, data may be presented through a user interface provided by a computing device. The user interface may include a GUI that displays information on a display device, such as a computer monitor or a touchscreen on a handheld computer device. The GUI may include various GUI widgets that organize what data is shown as well as how data is presented to a user. Furthermore, the GUI may present data directly to the user, e.g., data presented as actual data values through text, or rendered by the computing device into a visual representation of the data, such as through visualizing a data model.

For example, a GUI may first obtain a notification from a software application requesting that a particular data object be presented within the GUI. Next, the GUI may determine a data object type associated with the particular data object, e.g., by obtaining data from a data attribute within the data object that identifies the data object type. Then, the GUI may determine any rules designated for displaying that data object type, e.g., rules specified by a software framework for a data object class or according to any local parameters defined by the GUI for presenting that data object type. Finally, the GUI may obtain data values from the particular data object and render a visual representation of the data values within a display device according to the designated rules for that data object type.

Data may also be presented through various audio methods. In particular, data may be rendered into an audio format and presented as sound through one or more speakers operably connected to a computing device.

Data may also be presented to a user through haptic methods. For example, haptic methods may include vibrations or other physical signals generated by the computing system. For example, data may be presented to a user using a vibration generated by a handheld computer device with a predefined duration and intensity of the vibration to communicate the data.

The above description of functions presents only a few examples of functions performed by the computing system (400) of Figure 4A and the nodes *(e.g.,* node X (422), node Y (424)) and/ or client device (426) in Figure 4B. Other functions may be performed using one or more embodiments of the disclosure.

Thus, from one perspective, there has now been described a method which uses private information with a shared single source of truth. A message is received responsive to adding a first shared block to a shared object ledger of a shared object. The message includes message data. A private block is added to a private object ledger to update a private object. The private block includes private data from the message data. A second shared block is added to the shared object ledger to update the shared object. The second shared block includes shared data from the message data.

While the disclosure has been described with respect to a limited number of embodiments, those skilled in the art, having benefit of this disclosure, will appreciate that other embodiments can be devised which do not depart from the scope of the disclosure as disclosed herein. Accordingly, the scope of the invention should be limited only by the attached claims.

Further examples of feature combinations taught by the present disclosure are set out in the following numbered clauses:
1. A method comprising:
   receiving a message responsive to adding a first shared block to a shared object ledger of a shared object, wherein the message includes message data;
   adding a private block to a private object ledger to update a private object, wherein the private block includes private data from the message data; and
   adding a second shared block to the shared object ledger to update the shared object, wherein the second shared block includes shared data from the message data.
2. The method of clause 1, further comprising:
   initiating a transaction by adding an initialize invoice block to the shared object ledger of the shared object; and
   completing the transaction by adding an invoice complete block to the shared object ledger of the shared object.
3. The method of clause 1 or clause 2, further comprising:
   adding the first shared block to the shared object ledger to update a shared object; and
   updating a first shared field of the shared object with a first shared value recorded in the first shared block.
4. The method of any preceding clause, further comprising:
   updating a private field of the private object with a private value recorded in the private block.
5. The method of any preceding clause, further comprising:
   updating a second shared field of the shared object with a second shared value recorded in the second shared block.
6. The method of any preceding clause, further comprising:
   traversing the shared object ledger to retrieve shared object data; and
   presenting the shared object data to a client device.
7. The method of any preceding clause, further comprising:
   receiving the message from a client device in response to presenting shared object data from the shared object to the client device.
8. The method of any preceding clause, further comprising:
   triggering an update to the private object in response to adding the first shared block.
9. The method of any preceding clause, further comprising:
   traversing a private object ledger, of the private object, to retrieve private object data; and
   traversing a first object ledger, of a first object, to retrieve first object data corresponding to the private object data;
   transmitting a request to a client device using the first object data; and
   receiving the message from the client device in response to the request.
10. The method of any preceding clause, further comprising:
   receiving the message from a client device responsive to traversing the private object ledger to retrieve private object data and transmitting a request to the client device using the private object data.
11. The method of any preceding clause, further comprising:
   receiving an update request to update the shared object
   authorizing access to the shared object by traversing a second private object ledger and traversing a second object to retrieve authorization data used to authorize the update request.
12. The method of any preceding clause,
   wherein the private object is a first private object,
   wherein the shared object is accessible by a first object, the first private object, a second private object, and a second object,
   wherein the first private object is accessible by the first object, and
   wherein the second private object is accessible by the second object.
13. The method of any preceding clause, further comprising:
   transitioning from a first workflow state to a second workflow state using a workflow transition, wherein the workflow transition comprises adding the second shared block and wherein the first workflow state, the second workflow state, and the workflow transition are comprised by a workflow graph.
14. A system comprising:
   a server comprising one or more processors and one or more memories; and
   a first client device;
   a second client device;
   an application, executing on one or more processors of the server, configured for:
      receiving a message responsive to adding a first shared block to a shared object ledger of a shared object, wherein the message includes message data;
      adding a private block to a private object ledger to update a private object, wherein the private block includes private data from the message data; and
      adding a second shared block to the shared object ledger to update the shared object, wherein the second shared block includes shared data from the message data.
15. The system of clause 14, wherein the application is further configured for:
   initiating a transaction by adding an initialize invoice block to the shared object ledger of the shared object; and
   completing the transaction by adding an invoice complete block to the shared object ledger of the shared object.
16. The system of clause 14 or clause 15, wherein the application is further configured for:
   adding the first shared block to the shared object ledger to update a shared object; and
   updating a first shared field of the shared object with a first shared value recorded in the first shared block.
17. A method comprising:
   initiating a transaction by adding an invoice block to a shared ledger;
   receiving an approval message responsive to adding a change block to the shared ledger to update a shared object;
   adding a private approval block to a private object ledger to update a private object, wherein the private block includes private data from the message data;
   adding a public approval block to the shared ledger to update the shared object, wherein the public approval block includes shared data from the message data; and
   completing the transaction by adding an invoice complete block to the shared ledger.
18. The method of clause 17, further comprising:
   adding a public data block to the shared ledger to update the shared object, wherein the public data block includes information from a buyer object.
19. The method of clause 17 or clause 18, further comprising:
   adding a public data block to the shared ledger to update the shared object, wherein the public data block includes information from a seller object.
20. The method of any of clauses 17 to 19, further comprising:
   adding a change block to the shared ledger to update the shared object, wherein the public data block includes information from a seller object.

## Claims

1. A method comprising:
receiving a message responsive to adding a first shared block to a shared object ledger of a shared object, wherein the message includes message data;
adding a private block to a private object ledger to update a private object, wherein the private block includes private data from the message data; and
adding a second shared block to the shared object ledger to update the shared object, wherein the second shared block includes shared data from the message data.

2. The method of claim 1, further comprising:
initiating a transaction by adding an initialize invoice block to the shared object ledger of the shared object; and
completing the transaction by adding an invoice complete block to the shared object ledger of the shared object.

3. The method of claim 1 or claim 2, further comprising:
adding the first shared block to the shared object ledger to update a shared object; and
updating a first shared field of the shared object with a first shared value recorded in the first shared block.

4. The method of any preceding claim, further comprising:
updating a private field of the private object with a private value recorded in the private block.

5. The method of any preceding claim, further comprising:
updating a second shared field of the shared object with a second shared value recorded in the second shared block.

6. The method of any preceding claim, further comprising:
traversing the shared object ledger to retrieve shared object data; and
presenting the shared object data to a client device.

7. The method of any preceding claim, further comprising:
receiving the message from a client device in response to presenting shared object data from the shared object to the client device.

8. The method of any preceding claim, further comprising:
triggering an update to the private object in response to adding the first shared block.

9. The method of any preceding claim, further comprising:
traversing a private object ledger, of the private object, to retrieve private object data; and
traversing a first object ledger, of a first object, to retrieve first object data corresponding to the private object data;
transmitting a request to a client device using the first object data; and
receiving the message from the client device in response to the request.

10. The method of any preceding claim, further comprising:
receiving the message from a client device responsive to traversing the private object ledger to retrieve private object data and transmitting a request to the client device using the private object data.

11. The method of any preceding claim, further comprising:
receiving an update request to update the shared object
authorizing access to the shared object by traversing a second private object ledger and traversing a second object to retrieve authorization data used to authorize the update request.

12. The method of any preceding claim,
wherein the private object is a first private object,
wherein the shared object is accessible by a first object, the first private object, a second private object, and a second object,
wherein the first private object is accessible by the first object, and
wherein the second private object is accessible by the second object.

13. The method of any preceding claim, further comprising:
transitioning from a first workflow state to a second workflow state using a workflow transition, wherein the workflow transition comprises adding the second shared block and wherein the first workflow state, the second workflow state, and the workflow transition are comprised by a workflow graph.

14. A system comprising:
a server comprising one or more processors and one or more memories; and
a first client device;
a second client device;
an application, executing on one or more processors of the server, configured for:
receiving a message responsive to adding a first shared block to a shared object ledger of a shared object, wherein the message includes message data;
adding a private block to a private object ledger to update a private object, wherein the private block includes private data from the message data; and
adding a second shared block to the shared object ledger to update the shared object, wherein the second shared block includes shared data from the message data.

15. The system of claim 14, wherein the application is further configured for:
initiating a transaction by adding an initialize invoice block to the shared object ledger of the shared object; and
completing the transaction by adding an invoice complete block to the shared object ledger of the shared object.
